# EUROPEAN PATENT APPLICATION

(11) **EP 3 051 437 A1**
(43) Date of publication of application: **03.08.2016**
(21) Application number: 15152732.2
(22) Date of filing: 27.01.2015
(51) Int. Cl.: G06F 17/30

(54) **Method for query processing for search in multilingual audio-archive and device for search of that processed query**

(71) Applicant: Západoceská univerzita v Plzni, 30614 Plzen (CZ)
(72) Inventor: Svec, Jan, 32600 Plzen (CZ); Zelinka, Jan, 28401 Kutna Hora (CZ); Prazak, Ales, 33027 Vejprnice (CZ); Psutka, Josef V., 32300 Plzen (CZ); Ircing, Pavel, 33209 Stenovice (CZ); Chylek, Adam, 43401 Most (CZ); Skorkovska, Lucie, 30100 Plzen (CZ); Soutner, Daniel, 31200 Plzen (CZ); Valenta, Tomas, 31800 Plzen (CZ); Stanislav, Petr, 43401 Most (CZ); Zajic, Zbynek, 30100 Plzen (CZ); Müller, Ludek, 32300 Plzen 1 (CZ)
(74) Representative: Langrova, Irena

(57) **Abstract**

The archive audio track is converted to text by means of the ASR method. The query (Qs) is searched in the indexed text form. The searched query (Qs) is expanded by a sequence of phonemes, homophones, synonyms and alternative forms in another language. Said query is expanded by means of the phonetic transcription (PT), the phonetic dictionary (PD), the thesaurus (TH), and the translator (TR).

The output consists in expanded queries (Qw) which are filtered by means of the index dictionary (ID). The index dictionary (ID) filtration outputs serve as the input (IS) of the search engine (S) which searches them in indexed text forms of the audio-archive and all partial results (Os) are displayed to the user.

The device contains the query-expansion (EQ) module and the search engine (S) module. These ones are interconnected mutually through the index dictionary (ID) and through the sub-word segmenter (SEG) if need be. The query-expansion (EQ) module is interconnected further with the phonetic transcription (PT) module, with the phonetic dictionary (PD) module, the thesaurus (TH) module, and with the translator (TR) module.

## Description

### Field of the Invention

The invention relates to the processing of an audio-archive containing utterances of which the automatic transcription in a text form contains considerable errors (a non-native speaker with ambiguous pronouncing and archaic expressions), for subsequent searching in such archive in the asked-form query (in the text or voice form).

### State of the Art

Nowadays, the searching in audio/video-archives is the object of many inventions. The audio track is converted in the text form by means of the Automatic Speech Recognition (ASR) system. In this text the searched query is found by means of a search engine by the Spoken Term Detection (STD) method.

The accuracy problem of the transcription, made by the ASR system, is reflected also in the query-searching result accuracy by means of the system. With higher error rate of the transcription being supposed, it is suitable to utilize not only the final transcription from the ASR but the whole information from the word lattice as it is done e.g. in EP1630705 (A2). In the word-lattice information a whole set of alternative transcriptions is assigned to the given time interval.

However, there is a problem if the searching in audio-archives, containing utterances in an obsolete language, has to be solved. These ones contain often non-utilized or not existing words (names of perished villages, contemporary designations, ...). Likewise, the audio-archive content, with non-native speakers or badly pronouncing persons, is difficult. This results in bad automatic transcription by means of the ASR system and impossibility to search an asked query correctly. Thanks to it one cannot search effectively in most extensive information passages.

### Substance of the Invention

The substance of the invention consists in a query processing method for searching in a multilingual audio-archive. The audio-archive is understood to be also an audio track of a video-archive. In the proposed method, the archive audio track is first converted to at least one indexed text form by means of the ASR method. The indexes refer to the original audio track of the archive. After having entered at least one word of the searched query by the user, the search is performed in the indexed text forms using the search engine working on the spoken term detection principle.

The searched query, serving as the index dictionary input, is expanded further by a phonetic transcription, homophones, synonyms and alternative forms in another language.

The query is expanded by means of:
- the phonetic transcription which converts a word to a sequence of phonemes. It is converted so that it is found in a dictionary with defined phonetic transcription or the expert phonetic rules are used to deduce the phonetic transcription;
- a phonetic dictionary containing the words corresponding to the sequence of phonemes;
- an index dictionary containing a list of words existing in indexed text forms of the archive;
- a thesaurus which can contain synonyms of the given word;
- a translator which can contain alternative word forms in other languages.

The query is expanded so that the searched query is inserted in the thesaurus and the translator. The query is converted also to the sequence of phonemes by means of the phonetic transcription, serving as the expanded query and simultaneously as the input of the phonetic dictionary creating homophones (the words conforming with the pronunciation form).

The homophones serve both as the expanded query and as the translator input and thesaurus input. The thesaurus output serves as the expanded query on the one hand and as the translator input on the other hand and is converted also to the sequence of phonemes by means of the phonetic transcription. The sequence of phonemes serves as the expanded query and at the same time as the input of the phonetic dictionary which creates the homophones. The homophones serve as the expanded query and simultaneously as the translator input.

The translator output serves as the expanded query and is also converted to the sequence of phonemes by means of the phonetic transcription. The sequence of phonemes serves as the expanded query and simultaneously as the input of the phonetic dictionary which creates the homophones. The homophones serve as the expanded query.

The expanded queries are filtered by means of the index dictionary. The index dictionary filtration outputs serve as the input of a search engine which searches them in indexed text forms of the audio-archive and displays all partial results to the user.

In an advantageous realization a sub-word segmenter can be applied further which creates sub-word units from the sequence of phonemes and preprocesses the expanded queries to the sequence of units which are greater than or equal as the phonemes. Then, the sub-word segmenter outputs serve, together with the index dictionary filtration outputs, as the search engine input.

In a fundamental embodiment the searched query is entered by the user by means of a keyboard in the text form in one-word form at least.

In an advantageous realization the user can enter the searched query verbally with a microphone. Such a query is processed by the ASR method the output of which is the representation of the query by a word and/or phoneme lattice, and/or a set of words, and/or a set of sub-word units.

It is advantageous if all partial results, gained as the search engine output, should be compared, by a similarity-evaluation method, to all expanded queries and also with an original searched query and arranged according to the evaluation and filtered in compliance with the language, preferred by the user.

A coherent invention consists in a device for searching a query processed in the above mentioned way. The device contains a computing unit with a storage (e.g. a PC), an entering device (e.g. a microphone or a keyboard), and an output device (e.g. a monitor or loudspeakers). Further, the device comprises a query-expansion software module and the search engine software module. These modules are interconnected mutually through the index dictionary and through the sub-word segmenter if need be.

Further the query-expansion module is interconnected with a phonetic transcription module, with the phonetic dictionary module, with a thesaurus module, and with a translator module. In an advantageous realization for processing the spoken query into a text one-word-form unit the device contains the microphone and the software ASR module. The software ASR module is connected to the query-expansion module input.

In another advantageous embodiment the device contains a software module for evaluating the search partial results and for arranging them according to the relevance relative to the searched or expanded query. The evaluation of partial results module inputs are interconnected with the query-expansion module and with the search engine module outputs. The evaluation of partial results module outputs are interconnected with the output device.

### Explanation of Drawings

The exemplary embodiment of the proposed invention is described with reference to drawings on which
Fig. 1 shows the block-diagram of the query processing by means of the query-expansion (EQ) module,

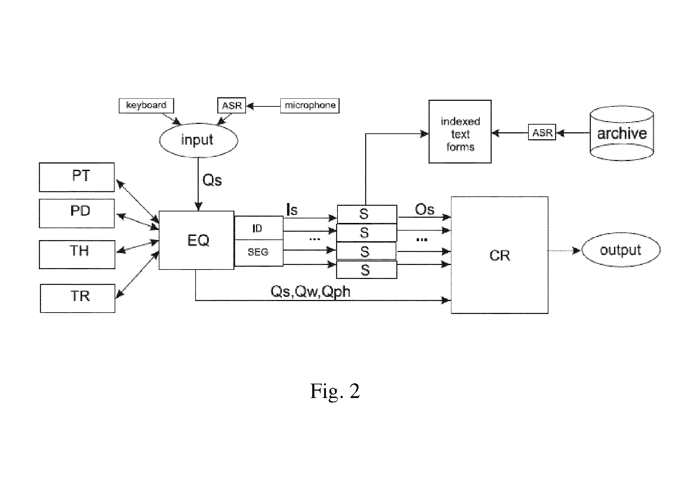

Fig. 2 presents the diagram of the device for searching in an audio-archive with possible expanding the searched query.

### Example on the Invention Realization

The method to process a query to be searched in a multilingual audio-archive is carried out so that the archive audio track should be converted first to the text by means of the ASR method to at least one indexed text form. Therefore, the so called indexing is made. The indexes refer to the original archive audio track (the so called time marks). After the user has entered one word W at least of the searched query Qs, said word is searched in indexed text forms with utilizing the search engine S which works on the principle of the spoken term detection STD. The entering can be carried out with a keyboard or voice.

The searched query Qs, serving as the index dictionary ID input, is expanded further by a phoneme sequence, homophones, synonyms, and alternative forms in another language. The expansion is made by means of:
- the phonetic transcription PT which converts a word W to a sequence of phonemes. It is carried out so that the word W is found in a dictionary with defined phonetic transcription or the expert phonetic rules (e.g. by a trained neural network) are utilized to deduce the phonetic transcription;
- the phonetic dictionary PD, containing the words corresponding to the sequence of phonemes;
- the index dictionary ID containing a list of words existing in indexed text forms of the archive;
- the thesaurus TH which can contain the synonyms of the word W;
- the translator TR which can contain alternative forms of the word W in other languages.

The expansion can be carried out so that the searched query Qs should be entered in the thesaurus TH and the translator TR and is also converted to a phoneme sequence by means of the phonetic transcription PT. The phoneme sequence serves partly as the expanded query Qph1 and as the phonetic dictionary PD input at the same time.

The homophones serve both as the expanded query Qph1 and for the translator TR input and for the thesaurus TH input on the other hand.

On the one hand, the thesaurus TH output serves as the expanded query Qw2 and, on the other hand, as the translator TR input. Further it is converted by means of the phonetic transcription PT, to the sequence of phonemes. This one serves partly as the expanded query Oph2 and simultaneously as the input of the phonetic dictionary PD which creates the homophones Qw3. The homophones Qw3 serve both as the expanded query Qw3 and as the translator TR input.

The translator TR output serve as the expanded query Qw4 and is also converted, by means of the phonetic transcription PT, to the sequence of phonemes. This one serves both as the expanded query Qph3 and as the input of the phonetic dictionary PD which creates the homophones Qw5. The homophones Qw5 serve as the expanded query Qw5.

The expanded queries Qw1 to Qw5 are filtered by means of the index dictionary ID. The filtration outputs from the index dictionary ID serve as the input Is of the search engine S which searches them in the indexed text forms of the audio-archive and displays all partial results Os for the user.

In this exemplary realization the sub-word segmenter SEG is utilized further. This one creates sub-word units from the sequence of phonemes. By means of said segmenter the expanded queries Qph1 to Qph3 are also preprocessed to a sequence of units, greater or equal as the phonemes. These units are e.g. the phonemes, triphones, syllables etc. The sub-word segmenter SEG outputs serve, together with the index dictionary ID filtration outputs, as the search engine S input Is.

The user can enter the words W of the searched query Qs by means of a keyboard or a microphone verbally. The verbally-entered searched query is processed subsequently by the ASR method the output of which consists in the query representation by a word lattice and/or a phoneme lattice and/or a word set and/or a sub-word-unit set.

All partial results Os, gained as the search engine S output, are compared by the evaluation-comparison method with all expanded queries Qr and Qph and also with the original searched query Qs. The evaluation can be made e.g. by the so called Levenshtein distance. Subsequently, they are arranged according to the evaluation and filtered in compliance with the user's preferred language.

The searching device for the query, processed by the above mentioned way, comprises a computing unit with a storage, a microphone-and-keyboard entering device and an output device in the form of a monitor and loudspeakers. The storage serves both to store the indexed archive, transcribed in a text form by the means of the ASR method, and individual dictionaries, and further to store the searched and expanded queries. Further, the storage comprises a query-expansion EQ software module and a search engine S software module. These modules are interconnected mutually through the index dictionary ID and the sub-word segmenter SEG. The query-expansion EQ module is connected further to the module PT, making the phonetic transcription, to the phonetic dictionary PD module, to the thesaurus TH module, and to the translator TR module. Further, the device contains the software module ASR for spoken-query processing to the text form in the form of one word W at least. The software module ASR is connected to the query-expansion EQ module input.

The device contains further the software module CR for evaluating the partial search results Os and arranging them in accordance with the relevance related to the searched query Qs or the expanded queries Qw and Qph.

The inputs of the module CR, evaluating partial results, are interconnected to the query-expansion EQ module and with the outputs of the module Os for the search engine S. The module for the evaluation of partial results CR outputs are interconnected with the output device.

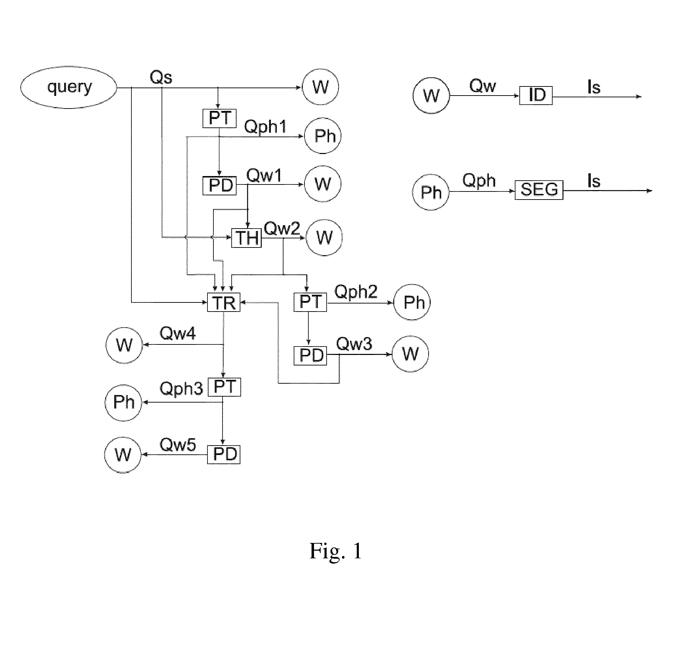

The query-expansion EQ module controls the query-expansion process. It utilizes other modules to do it. The query modification, across the language morphologies, utilizes the expert knowledge (alternative pronunciation of non-existing or foreign words), connects the thesaurus to a pronunciation dictionary and to an alternative transcription. The query expanding procedure is represented on the Fig. 1.

The component of the module EQ is the index dictionary ID. This one finds out whether the word W exists in the predefined set of words occurring in the transcribed archive. Another component of the module EQ is the sub-word segmenter SEG which converts the phonetic sequence to sub-word units (e.g. syllables ...).

The phonetic transcription PT module converts the word W to the sequence of phonemes (it either finds the word in the phonetic dictionary or utilizes expert phonetic rules e.g. by means of a trained neural network) to gain unknown phonetic transcription.

The phonetic dictionary PD module establishes a word from the sequence of phonemes, the meaningful state of said word being verified in the index dictionary ID.

The thesaurus TH module enables to find the synonyms of the word W. The translator TR module comprises alternative forms of the word in other languages.

The search engine S module tries to find the original or expanded query Qs, Qw or Qph by the known searching methods in the transcribed archive. In case of success, the partial result contains the index (the time marks) of its occurrence in the archive.

In the evaluation of partial results CR module the found results are compared with the original and expanded queries Qs, Qw or Qph and evaluated (e.g. by the Levenshtein distance). Subsequently, the results are filtered according to the evaluation or in comparison with e.g. the preferred language and displayed on an output device to the user.

The described method and the coherent device enable to make a high-quality transcription and searching in a historical audio-content by non-native speakers subsequently. As a rule, such an audio-content comprises bad pronunciation and often unused/non-existing words (pre-war names of villages, contemporary designations etc.). They ensure to search a given archive passage for the user even if the asked query needn't correspond precisely to the form occurring in the archive (e.g. Auschwitz/Osvetim).

### List of Reference Symbols

- ID: - index dictionary
- Is: - search engine input
- Os: - partial result
- PD: - phonetic dictionary
- PT: - phonetic transcription
- Qph: - expanded query as phoneme sequence
- Qs: - original searched query
- Qw: - word-form expanded query
- S: - search engine
- SEG: - segmenter
- TH: - thesaurus
- TR: - translator
- W: - word of the searched query
- STD: - Spoken Term Detection
- ASR: - Automatic Speech Recognition

## Claims

1. Method of query processing for search in multilingual audio-archive where the archive audio track is converted first to a text of one indexed form at least by the ASR method where the indexes refer to original audio track of the archive,
where, after entering one word (W) at least of the searched query (Qs) by the user, said word (W) is searched in indexed text forms by making use of a search engine (S), working on the Spoken Term Detection (STD) principle,
**characterized in that**
the searched query (Qs), serving as the index dictionary (ID) input, is expanded further by a sequence of phonemes, homophones, synonyms and alternative forms in another language, said expansion being made by means of
- the phonetic transcription (PT) which converts the word (W) to a sequence of phonemes so that it is found in a dictionary with defined phonetic transcription or expert phonetic rules are used to deduce said phonetic transcription;
- the phonetic dictionary (PD) which contains words corresponding to the sequence of phonemes;
- the index dictionary (ID) which contains a list of words existing in indexed text forms of the archive;
- the thesaurus (TH) which contains synonyms of the word (W);
- the translator TR, containing alternative forms of the word (W) in other languages so that the searched query (Qs) is inserted in the thesaurus (TH) and the translator (TR) and converted also, by means of the phonetic transcription (PT), to the sequence of phonemes, said sequence serving as an expanded query (Qph1) on the one hand and as the input of the phonetic dictionary (PD) which creates the homophones,
where the homophones serve, on the one hand, as the expanded query (Qw1) and as the translator (TR) input and for the thesaurus (TH) input, on the other hand,
the thesaurus (TH) output serves on the one hand as the expanded query (Qw2) and as the translator (TR) input on the other hand and is also converted to the sequence of phonemes by means of the phonetic transcription (PT), said sequence of phonemes serving as the expanded query (Qph2) and simultaneously as the input of said phonetic dictionary (PD), creating the homophones (Qw3), where the homophones (Qw3) serve as the expanded query (Qw3) and as the translator (TR) input simultaneously,
the translator (TR) output serves as the expanded query (Qw4) and is also converted to the sequence of phonemes by means of the phonetic transcription (PT), said sequence of phonemes serving as the expanded query (Qph3) and simultaneously as the input of the phonetic dictionary (PD) creating the homophones (Qw5) where said homophones (Qw5) serve as the expanded query (Qw5),
said expanded queries (Qw1 to Qw5) being filtered by means of the index dictionary (ID) and the index dictionary (ID) filtration outputs serving as the input (Is) of the search engine (S) searching them in indexed text forms of the audio-archive and displaying all partial results (Os) to the user.

2. Method of query processing for search in multilingual audio-archive according to the Claim 1, **characterized in that** the sub-word segmenter (SEG) is utilized further which creates sub-word units from the sequence of phonemes and by means of said segmenter the expanded queries (Qph1 to Qph3) are preprocessed to the sequence of units being greater or equal as the phonemes, the sub-word segmenter (SEG) outputs serving, together with the filtration outputs of the index dictionary (ID), as the search engine (S) input (Is).

3. Method of query processing for search in multilingual audio-archive according to the Claim 1 or 2, **characterized in that** at least one word (W) of the searched query (Qs) is entered verbally by the user by means of a microphone and is processed by the ASR method the output of which represents the query by means of a word and/or phoneme lattice and/or a set of words and/or a set of sub-word units.

4. Method of query processing for search in multilingual audio-archive according to any of the Claims 1 to 3, **characterized in that** all partial results (Os), gained as the search engine (S) output, are compared, by means of the similarity-evaluation method, to all expanded queries (Qw and Qph) and also to the original searched query (Qs) and arranged in compliance with the evaluation and filtered in compliance with a language preferred by the user.

5. Device for search of the query, processed by the method according to any of the Claims 1 to 4, containing a computing unit with a storage, an entering device and an output device, **characterized in that** it contains further a query-expansion (EQ) software module and a software module for said search engine (S),
said modules being interconnected mutually through the index dictionary (ID) and through the sub-word segmenter (SEG) if need be,
said query-expansion (EQ) module being further interconnected with the phonetic transcription (PT) module, with the phonetic dictionary (PD) module, with the thesaurus (TH) module, and with the translator (TR) module.

6. Device for search of the query according to the Claim 5, **characterized in that** it contains a microphone and the software module ASR for pronounced-query processing, said query being represented by the word and/or phoneme lattice and/or a set of words and/or a set of sub-word units with the software module ASR being connected to the query-expansion (EQ) module input.

7. Device for search of the query according to the Claim 5 or 6, **characterized in that** it contains the software module (CR) for the evaluation of partial results (Os) in order to arrange them according to the relevance thereof to the searched (Qs) or expanded query (Qw and Qph),
said evaluation of partial results (CR) module inputs being interconnected with the query-expansion (EQ) module and with the outputs (Os) of the search engine (S) and the evaluation of partial results (CR) module outputs being interconnected with said output device.
